# EUROPEAN PATENT APPLICATION

(11) **EP 4 130 834 A1**
(43) Date of publication of application: **08.02.2023**
(21) Application number: 21779025.2
(22) Date of filing: 26.01.2021
(51) Int. Cl.: G02B 7/04, B23K 26/046, B23K 26/082

(54) **FOCAL LENGTH ADJUSTING DEVICE AND LASER PROCESSING DEVICE**

(30) Priority: 31.03.2020 JP 2020064001
(71) Applicant: Panasonic Intellectual Property Management Co., Ltd., Osaka-shi, Osaka 540-6207 (JP)
(72) Inventor: MATSUMOTO Akihisa, Osaka 571-8506 (JP); MATSUI Hiroyuki, Osaka 571-8506 (JP); YAMAZAKI Naoya, Osaka 571-8506 (JP)
(74) Representative: Petraz, Gilberto Luigi
(86) International application number: PCT/JP2021/002582
(87) International publication number: WO 2021/199621

(57) **Abstract**

A focal length adjusting device 12 is provided with: a retention unit 70 for retaining a first lens 31; a guide unit 60 for supporting the retention unit 70 so as to allow movement along an optical axis Lx of laser light Lw; a stepper motor 80 that has a shaft body 81 and is arranged so that the central axis O1 of the shaft body 81 is orthogonal to the optical axis Lx; and a conversion unit 90 that is interposed between the shaft body 81 and the retention unit 70 and converts rotational movement of the shaft body 81 into linear movement of the retention unit 70. The conversion unit 90 comprises, between itself and the retention unit 70, a coupling unit 92 that transmits kinetic force from the conversion unit 90 to the retention unit 70 in a direction parallel to the optical axis Lx but does not transmit same in a direction parallel to the central axis O1 of the shaft body 81.

## Description

### TECHNICAL FIELD

The present disclosure relates to a focal length adjusting device and a laser processing device.

### BACKGROUND ART

A laser processing device deflects a laser beam emitted from a laser oscillator to scan the processing surface of a workpiece and process the workpiece. There are various types of laser processing devices that adjust the focal position of the laser beam.

Patent Literature 1 discloses an example of a technique that uses a guide or a linear scale to move a lens with the magnetic force of a magnet. Patent Literature 2 discloses a technique that couples a feed screw to the shaft of a stepper motor and produces rotation with the motor to move a single-axis table, which is mated with the feed screw, in an axial direction of the feed screw. This moves a concave lens that is attached to the single-axis table. Patent Literature 3 discloses a technique that converts rotational motion, which is produced by rotational operation of an adjustment knob, to linear motion and transmits the linear motion to a lens unit, which is in contact with a tapered structure, to move a lens.

### CITATION LIST

### Patent Literature

Patent Literature 1: Japanese Laid-Open Patent Publication No. 2009-291811
Patent Literature 2: Japanese Laid-Open Patent Publication No. 09-066357
Patent Literature 3: Japanese Laid-Open Patent Publication No. 2005-238327

### SUMMARY OF INVENTION

### Technical Problem

The linear drive obtained by magnetic force in Patent Literature 1 is not suitable for fine adjustment and smooth movement of the focal position such as when moving the focal point during processing. Thus, there is still room for improvement. Further, Patent Literature 1 uses a system implementing magnetic force. This will require a means for generating magnetic force and increase the space occupied by such means.

Patent Literature 2 uses the rotation produced by the stepper motor to move the single-axis table. However, complicated precision machining of the feed screw and the single-axis table will be necessary to allow for focal point movement during processing. Further, the demand for performing laser processing at higher speeds is increasing year by year. Patent Literature 2 is not applicable for situations under which the focal position is frequently adjusted. Moreover, due to play of the screw structure between the feed screw and the single-axis table, the single-axis table may be positioned differently when the single-axis table is moved toward the stepper motor and when the single-axis table is moved away from the stepper motor. Thus, Patent Literature 2 still has room for improvement with regard to adjustment of the focal length.

In Patent Literature 3, adjustments are performed manually. However, for automation, even when a structure that urges the lens in the same direction is employed, the lens may not be positioned as intended with respect to the rotation direction of the adjustment knob. Thus, Patent Document 3 still has room for improvement with regard to the adjustment of the focal length.

It is an objective of the present disclosure to provide a focal length adjusting device and a laser processing device that allow the focal length of a laser beam to be adjusted with a simple structure having high precision.

### Solution to Problem

To achieve the above objective, a focal length adjusting device in accordance with the present disclosure includes a first lens and a second lens arranged on an optical axis of the first lens. The focal length adjusting device adjusts a distance between the first lens and the second lens to adjust a focal length of a laser beam transmitted through the first lens and the second lens. The focal length adjusting device includes a retainer that holds the first lens, a guide that supports the retainer so that the retainer is movable along the optical axis of the laser beam, a stepper motor including a shaft and disposed so that a center axis of the shaft is orthogonal to the optical axis, and a converter located between the shaft and the retainer to convert rotational motion of the shaft to linear motion of the retainer. The converter includes a joint joined with the retainer and configured to transmit kinetic force from the converter to the retainer in a direction parallel to the optical axis and not transmit kinetic force in a direction parallel to the center axis of the shaft.

Further, a laser processing device in accordance with the present disclosure is a laser processing device that scans and processes a processing surface of a workpiece with a laser beam. The laser processing device includes a laser oscillator that emits the laser beam, a scanner that performs scanning with the laser beam, and a focal length adjusting device including a first lens and a second lens that are arranged on an optical axis of the laser beam and located between the laser oscillator and the scanner. The focal length adjusting device adjusts a distance between the first lens and the second lens to adjust a focal length of a laser beam directed from the scanner toward the workpiece. The focal length adjusting device includes a retainer that holds the first lens, a guide that supports the retainer so that the retainer is movable along the optical axis, a stepper motor including a shaft and disposed so that a center axis of the shaft is orthogonal to the optical axis, and a converter located between the shaft and the retainer to convert rotational motion of the shaft to linear motion of the retainer. The converter includes a joint joined with the retainer and configured to transmit kinetic force from the converter to the retainer in a direction parallel to the optical axis and not transmit kinetic force in a direction parallel to the center axis of the shaft.

### Advantageous Effects of Invention

One aspect of the present disclosure provides a focal length adjusting device and a laser processing device that allow the focal length of a laser beam to be adjusted with a simple structure having high precision.

### BRIEF DESCRIPTION OF THE DRAWINGS

Fig. 1 is a block diagram illustrating one embodiment of a laser processing device.
Fig. 2 is a perspective view of a focal length adjusting device.
Fig. 3 is a plan view of the focal length adjusting device.
Fig. 4 is an enlarged perspective view showing part of the focal length adjusting device.
Fig. 5 is a side view of the focal length adjusting device.
Fig. 6 is an enlarged cross-sectional view taken along line 6-6 in Fig. 5 and showing a main part of the focal length adjusting device.
Figs. 7A to 7C are diagrams illustrating the relationship of the lens position and the focal point.
Fig. 8 is a diagram illustrating the laser beam when the focal length is adjusted.
Fig. 9 is a diagram illustrating the laser beam when the focal length is not adjusted.

### DESCRIPTION OF EMBODIMENTS

One embodiment will now be described.

In the accompanying drawings, elements are illustrated for simplicity and clarity and may be exaggerated. Such elements have not necessarily been drawn to scale. To facilitate understanding, hatching lines of certain elements may not be shown in the cross-sectional drawings.

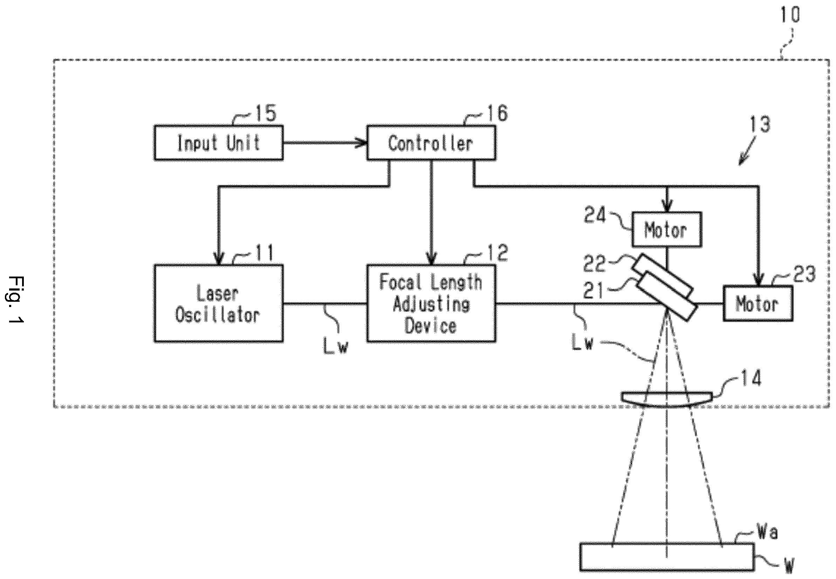

As shown in Fig. 1, a laser processing device 10 includes a laser oscillator 11, a focal length adjusting device 12, a scanner 13, an optical member 14, an input unit 15, and a controller 16.

The laser oscillator 11 emits a laser beam Lw to process a workpiece W. The laser oscillator 11 is, for example, a laser beam source such as a YAG laser, a CO₂ laser, or a fiber laser. The laser beam Lw is emitted via the focal length adjusting device 12, the scanner 13, and the optical member 14 to the workpiece W.

The focal length adjusting device 12 has the functionality of a beam expander that adjust (expands) the beam diameter of the laser beam Lw emitted from the laser oscillator 11. Further, the focal length adjusting device 12 has the functionality of a focal length adjusting device that adjusts the focal length of a laser beam.

The scanner 13 performs scanning with the laser beam Lw emitted from the laser oscillator 11. The scanner 13 includes two galvano mirrors 21 and 22 and motors 23 and 24 that drive the galvano mirrors 21 and 22. The galvano mirrors 21 and 22 are, for example, total reflection mirrors. The galvano mirrors 21 and 22 are supported to be pivotal in predetermined directions. The galvano mirror 21 is supported to be pivotal in a first direction (e.g., X-axis direction) with respect to the workpiece W, and the galvano mirror 22 is supported to be pivotal in a second direction (direction orthogonal to first direction, e.g., Y-axis direction) with respect to the workpiece W. The motor 23 pivots and drives the galvano mirror 21, and the motor 24 pivots and drives the galvano mirror 22. This allows the scanner 13 to perform two-dimensional scanning on the workpiece W with the laser beam Lw in two predetermined directions (X-axis direction and Y-axis direction)

The laser beam Lw is reflected by the scanner 13 and emitted via the optical member 14 to the workpiece W. The optical member 14 transmits the laser beam Lw and is, for example, a focusing lens (converging lens), a glass member (protective glass), or the like. When the optical member 14 is a focusing lens, the optical member 14 focuses the laser beam Lw, of which the beam diameter (or, in some cases, focusing angle) has been adjusted by the focal length adjusting device 12. When the optical member 14 is a glass member (protective glass), the optical member 14 transmits the laser beam Lw, of which the beam diameter and focusing angle have been adjusted by the focal length adjusting device 12.

The laser processing device 10 emits the laser beam Lw to the workpiece W and processes the workpiece W. The processing with the laser beam Lw includes a process for removing (cutting) material from the surface of the workpiece W in accordance with a processing pattern, a process using the heat of the laser beam Lw to change the color or transform part of the surface of the workpiece W in accordance with a processing pattern, and the like.

The input unit 15 is formed by an input device such as a keyboard and mouse, a display device such as a liquid crystal display, a PC, and the like. An operator operates the input unit 15 to set the intensity of the laser beam Lw, the scanning speed, the inter-workpiece distance, the processing pattern, and the like with the controller 16. The input unit 15 may include a touchscreen. The input unit 15 may be a mobile terminal connected to the controller 16 through wireless communication.

The controller 16 controls the laser oscillator 11, the focal length adjusting device 12, and the scanner 13 based on various settings. For example, the controller 16 controls the intensity (laser power, output strength) of the laser beam Lw emitted from the laser oscillator 11 and the activation and deactivation of the laser beam Lw based on the set intensity. Further, the controller 16 controls the motors 23 and 24 of the scanner 13 and the focal length adjusting device 12 based on the processing pattern. This pivots the galvano mirrors 21 and 22 to emit the laser beam Lw to a specified position on the workpiece W and adjust the focal length of the laser beam.

### Adjustment of Focal Length

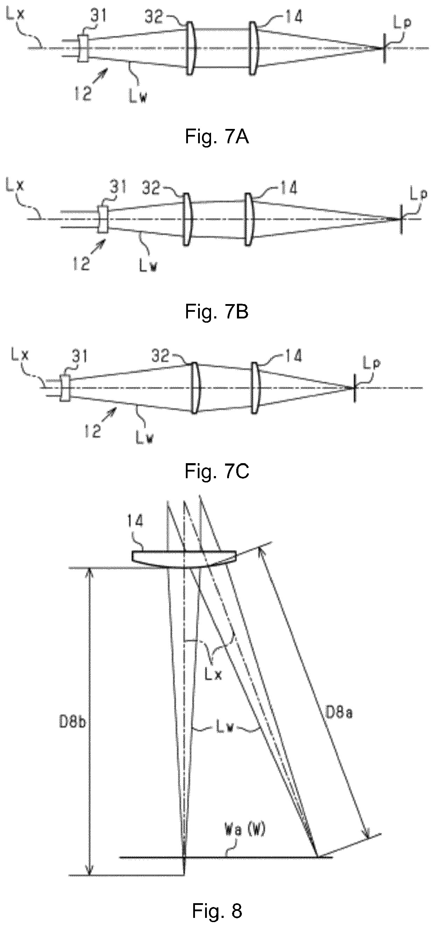

As illustrated in Fig. 7A, the focal length adjusting device 12 includes at least two lenses 31 and 32. The first lens 31 is, for example, a concave lens, and the second lens 32 is, for example, a convex lens. The first lens 31 and the second lens 32 expands the beam diameter of the incident laser beam so that the output laser beam Lw forms a collimated beam. In a case where the optical member 14 is a focusing (converging) lens, the optical member 14 focuses the laser beam Lw.

As illustrated in Fig. 7B, when the first lens 31 is moved toward the second lens 32, the laser beam Lw passing through the second lens 32 will be expanded and gradually increased in beam diameter. This laser beam Lw is focused by the optical member 14 at a focal position that is farther from the optical member 14 than the focal position shown in Fig. 7A. Thus, the focal length of the laser beam Lw is increased.

As illustrated in Fig. 7C, when the first lens 31 is moved away from the second lens 32, the laser beam Lw passing through the second lens 32 will be reduced and gradually decreased in beam diameter. This laser beam Lw is focused by the optical member 14 at a focal position that is closer to the optical member 14 than the focal position shown in Fig. 7A. Thus, the focal length of the laser beam Lw is decreased.

### Structure of Beam Adjustor (Focal Length Adjusting Device)

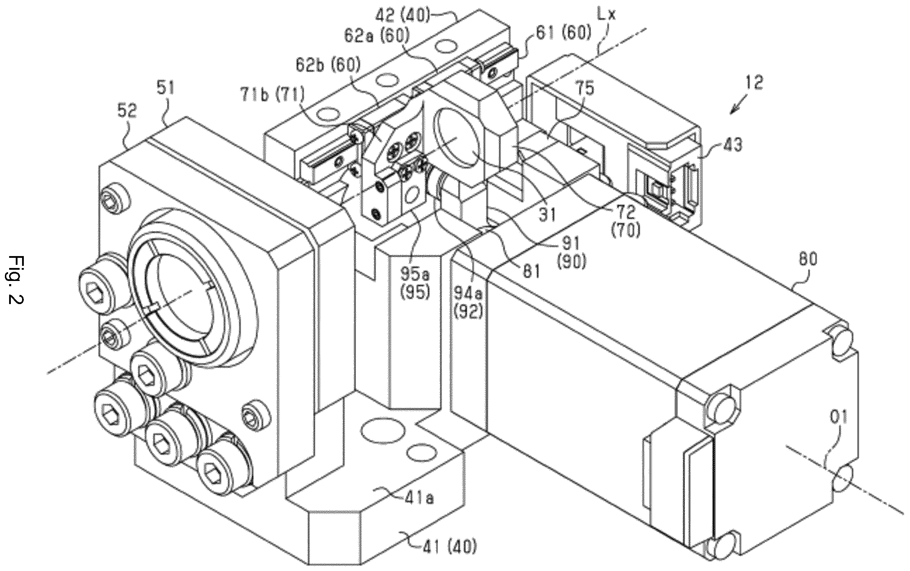

Figs. 2 to 6 show the structure of the focal length adjusting device 12.

As shown in Figs. 2 to 6, the focal length adjusting device 12 includes a base 40, a lens holder 51, a holder base 52, a guide 60, a retainer 70, a stepper motor (hereafter, simply referred to as the motor) 80, and a converter 90.

The base 40 is fixed to an optical base (not shown) that is fixed to the laser oscillator 11 and the scanner 13 shown in Fig. 1. The base 40 includes a base plate 41, which is fixed to the optical base, and a bracket 42, which projects from the base plate 41. In the present embodiment, the base plate 41 and the bracket 42 are formed integrally. The holder base 52 is fixed to the base plate 41, and the guide 60 and the motor 80 are fixed to the bracket 42. The retainer 70 is fixed to the guide 60. The converter 90 is located between the motor 80 and the retainer 70.

The retainer 70 holds the first lens 31. The retainer 70 includes a base plate 71 and a lens mount 72, which is arranged on a side surface of the base plate 71. The lens mount 72 has the form of a barrel to receive the first lens 31. A fixing ring 73 is fixed to the lens mount 72. The fixing ring 73 fixes the first lens 31. The focal length adjusting device 12 is arranged so that the center of the first lens 31 lies on the optical axis Lx of the laser beam Lw.

The base plate 71 includes a first base portion 71a and a second base portion 71b that extend parallel to the optical axis Lx of the laser beam Lw. The base plate 71 (first base portion 71a and second base portion 71b) is fixed to the guide 60, which is fixed to the base 40.

The guide 60 includes a single rail 61 and first and second blocks 62a and 62b, which are mounted on the rail 61. The rail 61 is fixed to the base 40 so as to extend parallel to the optical axis Lx of the laser beam Lw. The first block 62a and the second block 62b move along the rail 61. Thus, the first block 62a and the second block 62b move along the optical axis Lx of the laser beam Lw.

The base plate 71 of the retainer 70 is fixed to the first block 62a and the second block 62b. The first base portion 71a of the base plate 71 is fixed to the first block 62a, and the second base portion 71b of the base plate 71 is fixed to the second block 62b. The lens mount 72, to which the first lens 31 is fixed, is located between the first block 62a and the second block 62b.

The motor 80 includes a shaft 81 rotated under control. The motor 80 is fixed to the base 40 so that the center axis O1 of the shaft 81 is orthogonal to the optical axis Lx of the laser beam Lw in plan view. In the present embodiment, the phrase "plan view" refers to a view taken in a direction orthogonal to an upper surface 41a of the base plate 41 of the base 40. The direction orthogonal to the optical axis Lx of the laser beam Lw is taken in a plan view and a view that is parallel to the surface of the base 40 where the rail 61 of the guide 60 is attached.

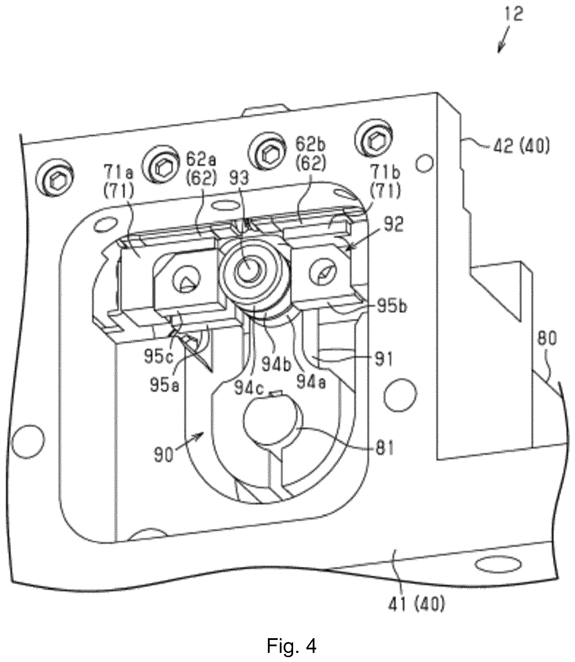

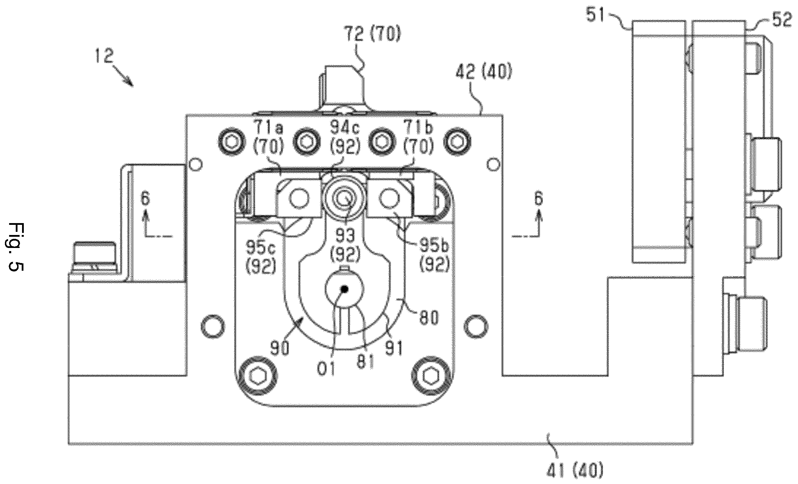

The converter 90 converts rotational motion of the shaft 81 of the motor 80 to linear motion of the retainer 70. As shown in Figs. 4 and 5, the converter 90 includes an arm 91 and a joint 92. The arm 91 is fixed to the shaft 81 of the motor 80. The arm 91 rotates integrally with the shaft 81. The joint 92, between the arm 91 and the retainer 70, transmits kinetic force from the converter 90 to the retainer 70 in a direction parallel to the optical axis Lx of the laser beam Lw and does not transmit kinetic force in a direction parallel to the center axis O1 of the shaft 81.

As shown in Figs. 4 and 5, the joint 92 includes a support shaft 93, bearings 94a, 94b, and 94c, and engagement pieces 95a, 95b, and 95. The arm 91 extends in the radial direction of the shaft 81 of the motor 80 and is fixed to the shaft 81 to rotate integrally with the shaft 81.

The support shaft 93 is fixed to the distal end of the arm 91 and extends from the arm 91 parallel to the center axis O1 of the shaft 81 of the motor 80.

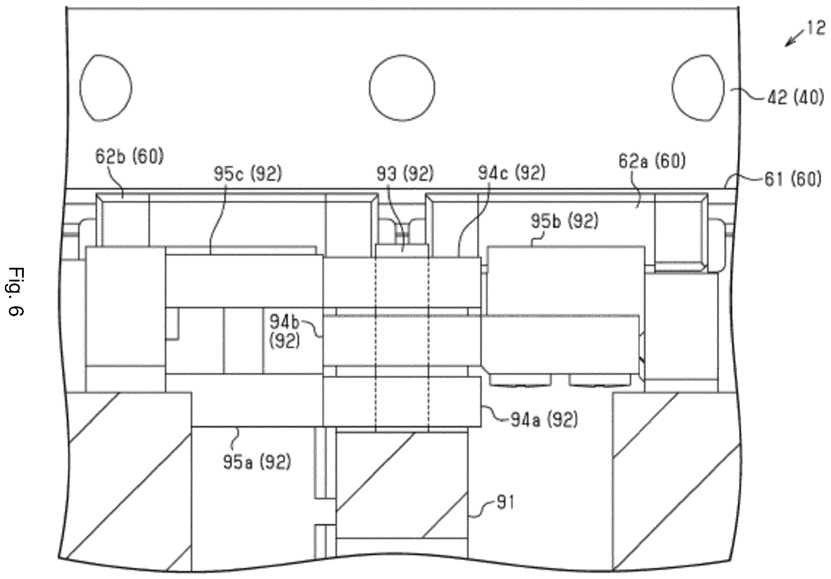

As shown in Figs. 4 and 6, the joint 92 of the present embodiment includes the three bearings 94a, 94b, and 94c. The three bearings 94a, 94b, and 94c are attached to the support shaft 93. The three bearings 94a, 94b, and 94c are aligned along the center axis of the support shaft 93, that is, in a direction parallel to the center axis O1 of the shaft 81 of the motor 80. Each of the bearings 94a to 94c includes an inner race, an outer race, balls or rollers, and a retainer that holds the balls or rollers. The inner race of each of the bearings 94a to 94c is fixed to the support shaft 93. The outer race of each of the bearings 94a to 94c rotates freely relative to the inner race, or the support shaft 93.

As shown in Figs. 4 and 6, the joint 92 of the present embodiment includes the three engagement pieces 95a, 95b, and 95c. The three engagement pieces 95a to 95c are fixed to the base plate 71 of the retainer 70. Each of the engagement pieces 95a to 95c is arranged with respect to the bearings 94a to 94c in a direction parallel to the optical axis Lx of the laser beam Lw. Further, the engagement pieces 95a to 95c are engaged with the bearings 94a to 94c in a first direction that is parallel to the optical axis Lx of the laser beam Lw and a second direction that is opposite (reversed from) the first direction. In detail, at least one of the three engagement pieces 95a to 95c engages a bearing in the first direction and the other ones engage bearings in the second direction.

As shown in Fig. 6, in the present embodiment, among the three bearings 94a to 94c attached to the support shaft 93, the middle bearing 94b is engaged with the engagement piece 95b in the first direction (right direction as viewed in Fig. 6). This bearing 94b is engaged with no element in the second direction (left direction as viewed in Fig. 6). Among the three bearings 94a to 94c, the two outer bearings 94a and 94c are engaged with the engagement pieces 95a and 95c in the second direction (left direction as viewed in Fig. 6). These two bearings 94a and 94c are engaged with no elements in the first direction (right direction as viewed in Fig. 6).

In the present embodiment, the engagement piece 95b is spaced apart from the engagement pieces 95a and 95c in the direction parallel to the optical axis Lx by a distance that is equal to the diameter of the bearings 94a to 94c. Thus, the engagement piece 95b is in contact with the bearing 94b, and the engagement pieces 95a and 95c are in contact with the bearings 94a and 94c.

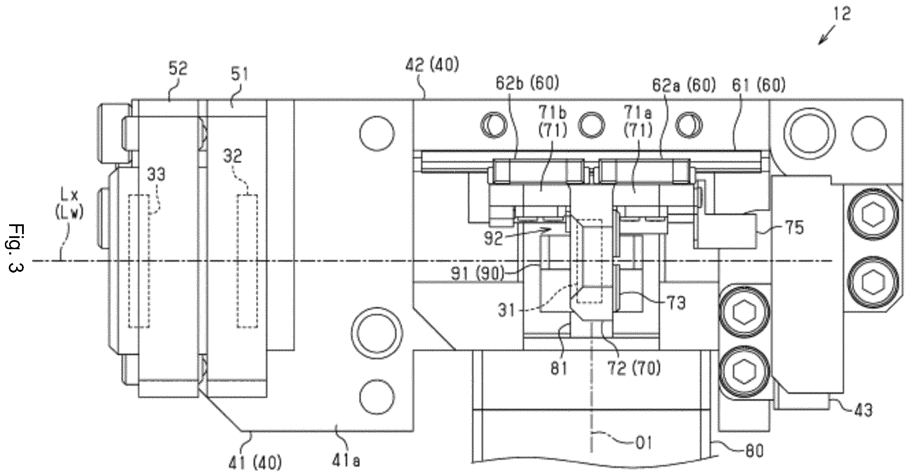

As shown in Figs. 2 and 3, the holder base 52 is fixed to the base plate 41 of the base 40. As shown in Fig. 3, the lens holder 51 of the present embodiment holds the second lens 32 and a third lens 33. The lens holder 51 is attached to the holder base 52, which is fixed to the base 40. The holder base 52 is configured to adjust the angle of the lens holder 51, that is, the angle of the second lens 32. The adjustment aligns the optical axis of the second lens 32 and the third lens 33 with the optical axis Lx of the laser beam Lw.

As shown in Fig. 3, when the present embodiment includes the second lens 32 and the third lens 33, the optical member 14 shown in Fig. 1 may be a glass member (protective glass). In this case, the focal length adjustment illustrated in Figs. 7A to 7C is performed by replacing the optical member 14 with the third lens 33 that focuses the laser beam Lw. When the optical member 14 is a focusing (converging) lens, one of the second lens 32 and the third lens 33 can be omitted.

As shown in Figs. 2 and 3, a photoelectric sensor 43 is attached to the base plate 41. The photoelectric sensor 43 is used to move the first lens 31, which is held by the retainer 70, to the initial position. A light-shielding plate 75 is fixed to the base plate 71 of the retainer 70 (first base portion 71a). The controller 16 drives the motor 80 until the photoelectric sensor 43 detects the light-shielding plate 75, and then drives the motor 80 over predetermined pulses to move the retainer 70, or the first lens 31, to the initial position.

More specifically, the controller 16 moves the retainer 70 at a high speed until the photoelectric sensor 43 detects the light-shielding plate 75. When the photoelectric sensor 43 detects the light-shielding plate 75, the controller 16 reverses the moving direction of the retainer 70 and moves the retainer 70 at a low speed until the photoelectric sensor 43 no longer detects the light-shielding plate 75. Then, the controller 16 moves the retainer 70 toward the photoelectric sensor 43 at a low speed until the photoelectric sensor 43 detects the light-shielding plate 75. In this manner, high-speed movement and low-speed movement are performed to move the retainer 70 to the initial position with high precision during a short period.

### Operation

The operation of the laser processing device 10 in the present embodiment will now be described.

The focal length adjusting device 12 includes the retainer 70 that holds the first lens 31, the guide 60 that supports the retainer 70 so that the retainer 70 is movable along the optical axis Lx of the laser beam Lw, the stepper motor 80 that includes the shaft 81 and is disposed so that the center axis O1 of the shaft 81 is orthogonal to the optical axis Lx, and the converter 90 that is located between the shaft 81 and the retainer 70 to convert rotational motion of the shaft 81 to linear motion of the retainer 70. The converter 90 includes the joint 92, joined with the retainer 70, to transmit kinetic force from the converter 90 to the retainer 70 in a direction parallel to the optical axis Lx and not transmit kinetic force in a direction parallel to the center axis O1 of the shaft 81.

In this structure, the converter 90 converts the rotational motion of the shaft 81 of the stepper motor 80 to linear motion of the retainer 70, and the motor 80 is disposed so that the center axis O1 of the shaft 81 of the motor 80 is orthogonal to the optical axis Lx of the laser beam Lw. This allows the focal length adjusting device 12 to be reduced in size. The joint 92 of the converter 90 transmits kinetic force in a direction parallel to the optical axis Lx and does not transmit kinetic force in a direction parallel to the center axis O1 of the shaft 81. Thus, in the retainer 70, kinetic force is applied only in the direction parallel to the optical axis Lx, and kinetic force is not applied in the direction parallel to the center axis O1 of the shaft 81, which is orthogonal to the optical axis Lx. Thus, the retainer 70 can be reduced in size and weight. Further, the retainer 70, or the first lens 31, can be moved with a simple structure having high precision in the direction of the optical axis Lx of the laser beam Lw.

The joint 92 includes the arm 91 that extends from the shaft 81 in the radial direction of the shaft 81, the support shaft 93 that extends from the arm 91 parallel to the center axis O1 of the shaft 81, the bearings 94a to 94c fixed to the support shaft 93, and the engagement pieces 95a to 95c that engage the bearings 94a to 94c in the direction parallel to the optical axis Lx. The inner races of the bearings 94a to 94c are fixed to the support shaft 93, and the outer races of the bearings 94a to 94c are engaged with the engagement pieces 95a to 95c. Accordingly, the inner races of the bearings 94a to 94c are rotated relative to the outer races, which are engaged with the engagement pieces 95a to 95c. Thus, the resistance to movement of the support shaft 93 is extremely small. Further, the motor 80 can easily move the retainer 70, or the first lens 31.

Among the three bearings 94a to 94c, the middle bearing 94b is referred to as the first bearing. The engagement piece 95b engaged with the first bearing 94b is referred to as the first engagement piece. Further, the bearings 94a and 94c at the opposite sides of the first bearing 94b are referred to as the second bearings. The engagement pieces 95a and 95c engaged with the second bearings 94a and 94c are referred to as the second engagement pieces. The first bearing 94b engages the first engagement piece 95b in the first direction that is parallel to the optical axis Lx. When the first bearing 94b pushes the engagement piece 95b and moves the retainer 70 in the first direction, kinetic force is produced. This moves the retainer 70 along a line connecting the first bearing 94b and the first engagement piece 95b. The second bearings 94a and 94c engage the second engagement pieces 95a and 95c in the second direction that is opposite the first direction. When the two second bearings 94a and 94c push the two second engagement pieces 95a and 95c and move the retainer 70 in the second direction, kinetic force is produced. This moves the retainer 70 between the two second bearings 94a and 94c, that is, along a line connecting the first bearing 94b and the first engagement piece 95b.

In this manner, the focal length adjusting device 12 of the present embodiment produces kinetic forces at the same position acting in opposite directions when the retainer 70 is moved in the first direction and when the retainer 70 is moved in the second direction. This easily moves the retainer 70, or the first lens 31, without applying kinetic force in other directions.

The first bearing 94b engages the first engagement piece 95b in the first direction and not in the second direction. The second bearings 94a and 94c engage the second engagement pieces 95a and 95c in the second direction and not in the first direction. In this case, in each of the bearings 94a to 94c, the inner race rotates freely relative to the outer race. Thus, the outer race of the first bearing 94b rotates in a direction opposite to the outer races of the second bearings 94a and 94c, and the motor 80 can easily drive and move each of the bearings 94a to 94c. This limits differences in the position of the retainer 70 when the retainer 70 is moved in the first direction and when the retainer 70 is moved in the second direction. Accordingly, the retainer 70, or the first lens 31, can be moved with high precision.

Further, the first engagement piece 95b is spaced apart from the second engagement pieces 95a and 95c in the direction parallel to the optical axis Lx by a distance that is equal to the outer diameter of each of the bearings 94a to 94c. Thus, there is no play between the first bearing 94b and the first engagement piece 95b and between the second bearings 94a and 94c and the second engagement pieces 95a and 95c. In this state, as described above, the outer race of the first bearing 94b is rotated in a direction opposite the outer races of the second bearings 94a and 94. Thus, the bearings 94a to 94c are easily moved without sliding on the engagement pieces 95a to 95c. Thus, the moving direction of the retainer 70 can be reversed and the retainer 70 can be easily positioned without having to move the retainer 70 in the same direction and without using an urging means.

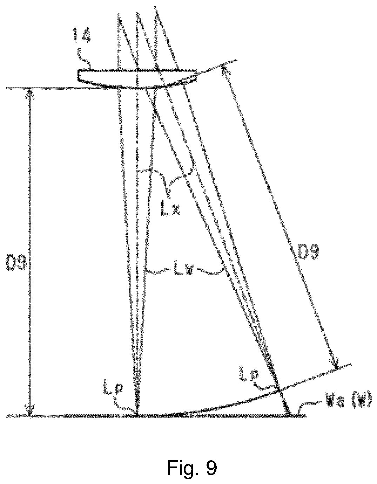

Fig. 9 is a diagram of a comparative example compared with the laser processing device 10 of the present embodiment.

Fig. 9 illustrates the relationship of a processed surface Wa of the workpiece W and the laser beam Lw when a focal length D9 from the optical member 14 to a focal point Lp of the laser beam Lw is not adjusted. In one example, the laser beam Lw is emitted at a right angle with respect to the processed surface Wa to the center of the processing range in the processed surface Wa of the workpiece W. The workpiece W is arranged so that the focal point Lp of the laser beam Lw is set to where the processed surface Wa is located. In this case, a location near the processing range in the processed surface Wa is irradiated with the laser beam Lw that is emitted diagonally. When the focal length D9 of the laser beam Lw is not adjusted, the focal point Lp of the laser beam Lw will be located above and away from the processed surface Wa. In this case, the processed surface Wa will be irradiated with the laser beam Lw that expands from the focal point Lp. Thus, the area of the spot light formed in the processed surface Wa irradiated by the laser beam Lw will be larger than the area of the spot light formed when the processed surface Wa is irradiated with a laser beam Lw that is emitted at a right angle with respect to the processed surface Wa.

The laser processing device 10 of the present embodiment adjusts the focal length of the laser beam Lw.

As shown in Fig. 8, in the range of the processed surface Wa of the workpiece W irradiated with the diagonally emitted laser beam Lw, for example, in the region near the processing range of the processed surface Wa of the workpiece W, a focal length D8a of the laser beam Lw is adjusted to set the focal point Lp of the laser beam Lw to the processed surface Wa. Thus, in the region of the processed surface Wa irradiated with the diagonally emitted laser beam Lw, the area of the spot light formed by the emitted laser beam Lw is decreased.

In the region of the processed surface Wa irradiated with the laser beam Lw that is emitted at a substantially right angle with respect to the processed surface Wa, a focal length D8b of the laser beam Lw is adjusted so that the focal length D8b is less than the focal length D8a. In this manner, the focal lengths D8a and D8b of the laser beam Lw are adjusted in accordance with where the processed surface Wa of the workpiece W is irradiated with the laser beam Lw.

The laser processing device 10 of the present embodiment executes defocus control to shift the focal point Lp of the laser beam Lw away from the processed surface Wa at the region of the processed surface Wa of the workpiece W irradiated with the laser beam Lw that is emitted at a substantially right angle with respect to the processed surface Wa. When the processed surface Wa of the workpiece W is irradiated with a laser beam Lw that is emitted diagonally, the spot light at the processed surface Wa will be shaped elliptically. The spot light will have a round shape when the processed surface Wa is irradiated with a laser beam Lw that is emitted at a right angle. The area of the spot light when the focal point Lp is set to where the processed surface Wa is located will be smaller than the area of the spot light when the laser beam Lw is diagonally emitted to the processed surface Wa. Thus, the area of the spot light will increase when shifting the focal point Lp of the laser beam Lw from the processed surface Wa. This reduces differences in the area of the spot light on the processed surface Wa.

### Advantages

As described above, the present embodiment has the following advantages.
(1) The focal length adjusting device 12 includes the retainer 70 that holds the first lens 31, the guide 60 that supports the retainer 70 so that the retainer 70 is movable along the optical axis Lx of the laser beam Lw, the stepper the motor 80 that includes the shaft 81 and is disposed so that the center axis O1 of the shaft 81 is orthogonal to the optical axis Lx, and the converter 90 that is located between the shaft 81 and the retainer 70 to convert rotational motion of the shaft 81 to linear motion of the retainer 70. The converter 90 includes the joint 92, joined with the retainer 70, to transmit kinetic force from the converter 90 to the retainer 70 in a direction parallel to the optical axis Lx and not transmit kinetic force in a direction parallel to the center axis O1 of the shaft 81.
   In this structure, the converter 90 converts the rotational motion of the shaft 81 of the stepper motor 80 to linear motion of the retainer 70, and the motor 80 is disposed so that the center axis O1 of the shaft 81 of the motor 80 is orthogonal to the optical axis Lx of the laser beam Lw. This allows the focal length adjusting device 12 to be reduced in size. The joint 92 of the converter 90 transmits kinetic force in a direction parallel to the optical axis Lx and does not transmit kinetic force in a direction parallel to the center axis O1 of the shaft 81. Thus, in the retainer 70, kinetic force is applied only in the direction parallel to the optical axis Lx, and kinetic force is not applied in the direction parallel to the center axis O1 of the shaft 81, which is orthogonal to the optical axis Lx. Further, the retainer 70 can be reduced in size and weight. Moreover, the retainer 70, or the first lens 31, can be moved with a simple structure having high precision in the direction of the optical axis Lx of the laser beam Lw.
(2) The joint 92 includes the arm 91 that extends from the shaft 81 in the radial direction of the shaft 81, the support shaft 93 that extends from the arm 91 parallel to the center axis O1 of the shaft 81, the bearings 94a to 94c fixed to the support shaft 93, and the engagement pieces 95a to 95c that engage the bearings 94a to 94c in the direction parallel to the optical axis Lx. The inner races of the bearings 94a to 94c are fixed to the support shaft 93, and the outer races of the bearings 94a to 94c are engaged with the engagement pieces 95a to 95c. Accordingly, the inner races of the bearings 94a to 94c are rotated relative to the outer races, which are engaged with the engagement pieces 95a to 95c. Thus, the resistance to movement of the support shaft 93 is extremely small. Further, the motor 80 can easily move the retainer 70, or the first lens 31.
(3) The first bearing 94b engages the first engagement piece 95b in the first direction that is parallel to the optical axis Lx. When the first bearing 94b pushes the engagement piece 95b and moves the retainer 70 in the first direction, kinetic force is produced. This moves the retainer 70 along a line connecting the first bearing 94b and the first engagement piece 95b. The second bearings 94a and 94c engage the second engagement pieces 95a and 95c in the second direction that is opposite the first direction. When the two second bearings 94a and 94c push the two second engagement pieces 95a and 95c and move the retainer 70 in the second direction, kinetic force is produced. This moves the retainer 70 between the two second bearings 94a and 94c, that is, along a line connecting the first bearing 94b and the first engagement piece 95b. Accordingly, the focal length adjusting device 12 of the present embodiment produces kinetic forces at the same position acting in opposite directions when the retainer 70 is moved in the first direction and when the retainer 70 is moved in the second direction. This easily moves the retainer 70, or the first lens 31, without applying kinetic force in other directions.
(4) The first bearing 94b engages the first engagement piece 95b in the first direction and not in the second direction. The second bearings 94a and 94c engage the second engagement pieces 95a and 95c in the second direction and not in the first direction. In this case, in each of the bearings 94a to 94c, the inner race rotates freely relative to the outer race. Thus, the outer race of the first bearing 94b rotates in a direction opposite to the outer races of the second bearings 94a and 94c, and the motor 80 can easily drive and move each of the bearings 94a to 94c. This limits differences in the position of the retainer 70 when the retainer 70 is moved in the first direction and when the retainer 70 is moved in the second direction. Accordingly, the retainer 70, or the first lens 31, can be moved with high precision.
(5) The first engagement piece 95b is spaced apart from the second engagement pieces 95a and 95c in the direction parallel to the optical axis Lx by a distance that is equal to the outer diameter of each of the bearings 94a to 94c. Thus, there is no play between the first bearing 94b and the first engagement piece 95b and between the second bearings 94a and 94c and the second engagement pieces 95a and 95c. In this state, as described above, the outer race of the first bearing 94b is rotated in a direction opposite the outer races of the second bearings 94a and 94. This easily moves the bearings 94a to 94c without sliding on the engagement pieces 95a to 95c. Thus, the moving direction of the retainer 70 can be reversed and the retainer 70 can be easily positioned without having to move the retainer 70 in the same direction and without using an urging means.
(6) In the range of the processed surface Wa of the workpiece W irradiated with the diagonally emitted laser beam Lw, for example, in the region around the processing range of the processed surface Wa of the workpiece W, the focal length D8a of the laser beam Lw is adjusted to set the focal point Lp of the laser beam Lw to the processed surface Wa. Thus, in the region of the processed surface Wa irradiated with the diagonally emitted laser beam Lw, the area of the spot light formed by the emitted laser beam Lw is decreased. In the region of the processed surface Wa irradiated with the laser beam Lw that is emitted at a substantially right angle with respect to the processed surface Wa, the focal length D8b of the laser beam Lw is adjusted so that the focal length D8b is less than the focal length D8a. The laser processing device 10 of the present embodiment executes defocus control to shift the focal point Lp of the laser beam Lw away from the processed surface Wa at the region of the processed surface Wa of the workpiece W irradiated with the laser beam Lw that is emitted at a substantially right angle with respect to the processed surface Wa. This reduces differences in the area of the spot light on the processed surface Wa.

### Modified Examples

The above-described embodiment may be modified as described below. The above-described embodiment and the modified examples described below may be combined as long as there is no technical contradiction.

In the above embodiment, the laser processing device may be formed by accommodating the laser oscillator 11 to the scanner 13 in the same housing or by accommodating the laser oscillator 11, the focal length adjusting device 12, and the scanner 13 in separate housings.

The converter may include two, four, or more bearings and two, four, and more engagement pieces.

When the laser beam Lw is emitted at a right angle with respect to the processed surface Wa of the workpiece W, the focal length may be adjusted to set the focal point Lp of the laser beam Lw to the processed surface Wa.

In the above embodiment, the first lens 31 is moved as illustrated in Figs. 7A to 7C to adjust the focal length. In contrast, the second lens 32 or the third lens 33 shown in Fig. 3 may be moved to adjust the focal length. Alternatively, two of the first lens 31 to the third lens 33 may be moved to adjust the focal length.

In the above embodiment, one of the second lens 32 and the third lens 33 can be omitted.

In the above embodiment, at least one of the first lens 31 to the third lens 33 can be formed by a plurality of lenses.

### REFERENCE SIGNS LIST

10: laser processing device
11: laser oscillator
12: focal length adjusting device
13: scanner
14: optical member
15: input unit
16: controller
21, 22: galvano mirror
23, 24: motor
31: first lens
31: lens
32: second lens
32: lens
40: base
41: base plate
41a: upper surface
42: bracket
43: photoelectric sensor
51: lens holder
52: holder base
60: guide
61: rail
62a: first block
62b: second block
70: retainer
71: base plate
71a: first base portion
71b: second base portion
72: lens mount
73: fixing ring
75: light-shielding plate
80: stepper motor
81: shaft
90: converter
91: arm
92: joint
93: support shaft
94a, 94c: bearing (second bearing)
94b: bearing (first bearing)
95a, 95c: engagement piece (second engagement piece)
95b: engagement piece (first engagement piece)
D8a, D8b, D9: focal length
Lp: focal point
Lw: laser beam
Lx: optical axis
O1: center axis
W: workpiece
Wa: processing surface

## Claims

1. A focal length adjusting device including a first lens and a second lens arranged on an optical axis of the first lens, the focal length adjusting device adjusting a distance between the first lens and the second lens to adjust the focal length of a laser beam transmitted through the first lens and the second lens, the focal length adjusting device comprising:
a retainer that holds the first lens;
a guide that supports the retainer so that the retainer is movable along the optical axis of the laser beam;
a stepper motor including a shaft and disposed so that a center axis of the shaft is orthogonal to the optical axis; and
a converter located between the shaft and the retainer to convert rotational motion of the shaft to linear motion of the retainer,
wherein the converter includes a joint joined with the retainer and configured to transmit kinetic force from the converter to the retainer in a direction parallel to the optical axis and not transmit kinetic force in a direction parallel to the center axis of the shaft.

2. The focal length adjusting device according to claim 1, wherein the joint includes:
an arm fixed to the shaft and extending in a radial direction of the shaft;
a support shaft extending from a distal end of the arm parallel to the center axis of the shaft;
a bearing including an inner race fixed to the support shaft; and
an engagement piece fixed to the retainer and engaged with the bearings in a first direction that is parallel to the optical axis and a second direction that is opposite the first direction.

3. The focal length adjusting device according to claim 2, wherein:
the bearing is one of a plurality of bearings;
the bearings are fixed to the support shaft; and
the engagement piece including a first engagement piece that is engaged with a first bearing among the bearings in the first direction and a second engagement piece that is engaged with a second bearing among the bearings in the second direction, the second bearing differing from the first bearing.

4. The focal length adjusting device according to claim 3, wherein:
the second bearing is one of two second bearings; and
the two second bearings are fixed to the support shaft sandwiching the first bearing along the center axis of the support shaft.

5. The focal length adjusting device according to claim 3 or 4, wherein the first engagement piece is spaced apart from the second engagement piece in a direction parallel to the optical axis by a distance that is equal to an outer diameter of the first bearing and the second bearing.

6. The focal length adjusting device according to any one of claims 2 to 5, wherein:
the retainer includes
a base plate fixed to the guide, and
a lens mount extending in a direction orthogonal to the base plate, the first lens being fixed to the first lens; and
the engagement piece is coupled to the base plate.

7. The focal length adjusting device according to claim 6, wherein:
the guide includes
a single rail extending along the optical axis, and
a first block and a second block attached to the rail and moved along the rail; and
the retainer is connected to the first block and the second block.

8. The focal length adjusting device according to claim 7, wherein the base plate includes:
a first base portion fixed to the first block and located at a side that is closer to the second lens than the first lens; and
a second base portion fixed to the second block at opposite the side that is closer to the second lens than the first lens.

9. A laser processing device that scans and processes a processing surface of a workpiece with a laser beam, the laser processing device comprising:
a laser oscillator that emits the laser beam;
a scanner that performs scanning with the laser beam; and
a focal length adjusting device including a first lens and a second lens that are arranged on an optical axis of the laser beam and located between the laser oscillator and the scanner, the focal length adjusting device adjusting a distance between the first lens and the second lens to adjust a focal length of a laser beam directed from the scanner toward the workpiece, wherein
the focal length adjusting device includes
a retainer that holds the first lens;
a guide that supports the retainer so that the retainer is movable along the optical axis,
a stepper motor including a shaft and disposed so that a center axis of the shaft is orthogonal to the optical axis; and
a converter located between the shaft and the retainer to convert rotational motion of the shaft to linear motion of the retainer,
the converter includes a joint joined with the retainer and configured to transmit kinetic force from the converter to the retainer in a direction parallel to the optical axis and not transmit kinetic force in a direction parallel to the center axis of the shaft.

## Amended claims

### Amended claims under Art. 19.1 PCT

1. (Amended) A focal length adjusting device including a first lens and a second lens arranged on an optical axis of the first lens, the focal length adjusting device adjusting a distance between the first lens and the second lens to adjust the focal length of a laser beam transmitted through the first lens and the second lens, the focal length adjusting device comprising:
a retainer that holds the first lens;
a guide that supports the retainer so that the retainer is movable along the optical axis of the laser beam;
a stepper motor including a shaft and disposed so that a center axis of the shaft is orthogonal to the optical axis; and
a converter located between the shaft and the retainer to convert rotational motion of the shaft to linear motion of the retainer,
wherein the converter includes a joint joined with the retainer and configured to transmit kinetic force from the converter to the retainer in a direction parallel to the optical axis and not transmit kinetic force in a direction parallel to the center axis of the shaft, the joint including:
an arm fixed to the shaft and extending in a radial direction of the shaft;
a support shaft extending from a distal end of the arm parallel to the center axis of the shaft;
a bearing including an inner race fixed to the support shaft; and
an engagement piece fixed to the retainer and engaged with the bearings in a first direction that is parallel to the optical axis and a second direction that is opposite the first direction.

2. (Deleted) The focal length adjusting device according to claim 1, wherein the joint includes:
an arm fixed to the shaft and extending in a radial direction of the shaft;
a support shaft extending from a distal end of the arm parallel to the center axis of the shaft;
a bearing including an inner race fixed to the support shaft; and
an engagement piece fixed to the retainer and engaged with the bearings in a first direction that is parallel to the optical axis and a second direction that is opposite the first direction.

3. (Amended) The focal length adjusting device according to claim 1, wherein:
the bearing is one of a plurality of bearings;
the bearings are fixed to the support shaft; and
the engagement piece including a first engagement piece that is engaged with a first bearing among the bearings in the first direction and a second engagement piece that is engaged with a second bearing among the bearings in the second direction, the second bearing differing from the first bearing.

4. The focal length adjusting device according to claim 3, wherein:
the second bearing is one of two second bearings; and
the two second bearings are fixed to the support shaft sandwiching the first bearing along the center axis of the support shaft.

5. The focal length adjusting device according to claim 3 or 4, wherein the first engagement piece is spaced apart from the second engagement piece in a direction parallel to the optical axis by a distance that is equal to an outer diameter of the first bearing and the second bearing.

6. (Amended) The focal length adjusting device according to any one of claims 1 and 3 to 5, wherein:
the retainer includes
a base plate fixed to the guide, and
a lens mount extending in a direction orthogonal to the base plate, the first lens being fixed to the first lens; and
the engagement piece is coupled to the base plate.

7. The focal length adjusting device according to claim 6, wherein:
the guide includes
a single rail extending along the optical axis, and
a first block and a second block attached to the rail and moved along the rail; and
the retainer is connected to the first block and the second block.

8. The focal length adjusting device according to claim 7, wherein the base plate includes:
a first base portion fixed to the first block and located at a side that is closer to the second lens than the first lens; and
a second base portion fixed to the second block at opposite the side that is closer to the second lens than the first lens.

9. (Amended) A laser processing device that scans and processes a processing surface of a workpiece with a laser beam, the laser processing device comprising:
a laser oscillator that emits the laser beam;
a scanner that performs scanning with the laser beam; and
a focal length adjusting device including a first lens and a second lens that are arranged on an optical axis of the laser beam and located between the laser oscillator and the scanner, the focal length adjusting device adjusting a distance between the first lens and the second lens to adjust a focal length of a laser beam directed from the scanner toward the workpiece, wherein
the focal length adjusting device includes
a retainer that holds the first lens;
a guide that supports the retainer so that the retainer is movable along the optical axis,
a stepper motor including a shaft and disposed so that a center axis of the shaft is orthogonal to the optical axis; and
a converter located between the shaft and the retainer to convert rotational motion of the shaft to linear motion of the retainer,
the converter includes a joint joined with the retainer and configured to transmit kinetic force from the converter to the retainer in a direction parallel to the optical axis and not transmit kinetic force in a direction parallel to the center axis of the shaft, the joint including:
an arm fixed to the shaft and extending in a radial direction of the shaft;
a support shaft extending from a distal end of the arm parallel to the center axis of the shaft;
a bearing including an inner race fixed to the support shaft; and
an engagement piece fixed to the retainer and engaged with the bearings in a first direction that is parallel to the optical axis and a second direction that is opposite the first direction.
